Europäisches Patentamt

European Patent Office

Office européen des brevets

(11) Publication number: **0 331 478**
**A2**

(12) # EUROPEAN PATENT APPLICATION

(21) Application number: **89302064.4**

(22) Date of filing: **01.03.89**

(51) Int. Cl.⁴: **G 05 B 19/417**

(30) Priority: **04.03.88 US 164276**

(43) Date of publication of application:
**06.09.89 Bulletin 89/36**

(84) Designated Contracting States: **DE FR GB**

(71) Applicant: **Hewlett-Packard Company
3000 Hanover Street
Palo Alto California 94304 (US)**

(72) Inventor: **Katz, Edward P.
19854 Seagull Way
Saratoga California 95070-3940 (US)**

**Williams, Paul F.
838 Dartsline Way
Sunnyvale California 94087 (US)**

**Sobel, Irwin
228 Arbor Road
Menlo Park California 94025 (US)**

(74) Representative: **Williams, John Francis et al
J.F. Williams & Co 34 Tavistock Street
London WC2E 7PB (GB)**

(54) **A manufacturing interface system.**

(57) A manufacturing interface system for use within a manufacturing system (10) composed of sub-systems, such as a design system (12), recipe generator (26) and workcell (14). Communication between sub-systems of information, such as designs and recipes, is accompanied by translating information used or produced by the sub-system from the sub-system's own format into a common representation format.

EP 0 331 478 A2

Bundesdruckerei Berlin

## Description

## A Manufacturing Interface System

The present invention relates generally to manufacturing systems, such as in a factory environment. The present invention further relates to the interfacing of manufacturing sub-systems of a manufacturing system, such as design systems and manufacturing production systems.

As factories have become more automated, the number of automated sub-systems in the factory increases. Examples of manufacturing sub-systems include design systems, control systems, monitoring systems, and production systems. An example of a design system is the computer aided design (CAD) system, which creates designs of articles to be manufactured. An example of a control system is the scheduler, which maintains the schedule of the work to be done by the manufacturing system. Monitoring systems collect data from other manufacturing sub-systems for analysis.

Examples of production systems include recipe generators and workcells. The term recipe is used here to mean a process plan for a particular workcell. A recipe generator produces a recipe which specifies how a product is to be manufactured by a workcell. A process planner produces a process plan which specifies which parts of a product are produced by which workcells and in what order they must be produced.

A workcell is any device or collection of devices that produces, or adds value to, a product. A product is broadly as any separate item, that may be the final product to be shipped to customers, or might be a sub-assembly of a much larger product. In printed circuit (PC) board assembly systems, examples of workcells are component placement sub-systems, wave soldering sub-systems, and inspection and test sub-systems.

Virtually, all manufacturing sub-systems were originally operated by human beings. Slowly each sub-system has been automated. When each sub-system was operated by human beings, communication between each sub-system was relatively simple as generally all human beings spoke the same language. However, as sub-systems have become automated, language barriers have developed. Unfortunately, there is no standard language for automated manufacturing sub-systems. Each sub-system manufacturer has developed its own language for its sub-systems.

There are presently several methods of effecting communication between automated sub-systems. Where a sub-system has a human operator, that operator can learn the language of the other sub-systems. Where the sub-system is completely automated, then there are two methods to effect communication. One method is where a human being learns the language of that sub-system and all other sub-systems it must communicate with and translates between them. The other method is where a translation program is written for each sub-system that the present sub-system must communicate with, which translates between sub-system languages.

As an example of the present manufacturing communication methods, a manufacturing system includes a design system (a CAD system), a recipe generator, and a workcell (a robotic circuit board assembly station). The goal of the manufacturing system is to take a component placement design from the design system and generate a recipe, which specifies the method and order of inserting components into a PC board, and to have the workcell execute the recipe by actually placing the components in the circuit board.

In a pre-automation environment, a design engineer would design the component layout for a circuit board. He would give the design to a manufacturing engineer, who would generate a recipe. The manufacturing engineer would give the recipe to a circuit board assembler, who would assemble the board according to the recipe.

When the design engineer started using a CAD system, the manufacturing engineer had to learn to read the language of the CAD system, or it had to be translated from the CAD langauge into the format he understood. When the circuit board assembler was replaced by an automated or robotic assembly station, the manufacturing engineer had to learn to write his recipes in the language of the assembly station or have his recipes translated. Finally, when the manufacturing engineer was replaced by a recipe generator program, a translation program had to be written for the design system to recipe generator program interface and for the recipe generator to robotic assembly station interface.

It should be clear that as each sub-system is automated, other sub-systems are affected and a substantial amount of work must be done to enable the sub-systems to communicate. This is the disadvantage of the present methods because these changes cause disruption of the manufacturing system and reduce production.

The disadvantages of the present system become more apparent as new sub-systems are added. For example, if a new CAD system is added from a different manufacturer, an entirely new translation program must be written. If a new recipe generator is added then two new translation programs (one for the CAD system and one for assembly station) must be written. For a manufacturing system with "n" sub-systems, there potentially "(n(n-1))/2" interface programs needed. For example, in a systems with 10 sub-systems, 45 interface programs would be required. If one more sub-system is added, then 10 more interface programs would need to be written.

Even in this small manufacturing system, the consequences of adding new sub-systems are substantial. However, in a large manufacturing system with multiple design systems, schedulers, controllers, monitoring systems, and numerous production systems, the number of translation programs between each pair of sub-systems that must communicate can be very large. Additionally, when a new sub-system is added that must communicate with a number of other sub-systems, a new translation program for each sub-system with which it must communicate, must be written.

Therefore, there is a need for a manufacturing interface system that does not need a separate translation program for each possible combination of manufacturing sub-systems.

The present invention provides an interface between manufacturing sub-systems where only one interface program for each sub-system is required. The interface for each sub-system translates information to and from a common representation format common to the entire manufacturing system.

When a new sub-system is added to the manufacturing system, only one interface program is created and the existing communication interfaces are unaffected, thus reducing the impact on production of the manufacturing system. All the manufacturing data of each manufacturing sub-system is available to all other sub-systems in a common representation format. There is no need for separate translation programs between each sub-system.

When a new sub-system is added to the manufacturing system, only one interface program needs to be written for that sub-system. It is also possible to avoid creating new interface programs, by creating new sub-systems that directly use information in the common representation format.

In the preferred embodiment, a design from a design system (a CAD system in this case) is translated by a design interface into a common representation format. A recipe generator, which directly uses designs in the common representation format, produces a recipe from the common representation design. The recipe is also in the common representation form. However, while the recipe is in the same format as the design, they contain different information. It is only the representation of the information that is the same in the common representation format.

A workcell interface takes the common representation recipe and produces a recipe in the format of the workcell (a robotic circuit board assembler in this case), so that the workcell can execute the original design from the design system.

In an alternative embodiment, a number of design systems, each having its own design interface, produce designs that are translated into the common representation format. A recipe generator, that directly uses the common representation designs produces recipes in the common representation format. A number of workcells, each having its own workcell interface, accept recipes in their own format translated from the common representation recipes by their workcell interfaces.

In another alternate embodiment, a design system, a recipe generator, and a workcell all use their own language format. Each of these sub-systems has its own interface for translating information to and from a common representation format. A design from a design system is translated by a design interface into a common representation format. An interface for a recipe generator, translates the common representation design into the format of the recipe generator. The recipe generator produces a recipe in its own format. The interface for the recipe generator translates the recipe into the common representation format. A workcell interface takes the common representation recipe and produces a recipe in the format of the workcell, so that the workcell can execute the original design from the design system.

In another alternative embodiment, the manufacturing system includes a number of sub-systems which use their own language format and a number of sub-systems which use a common representation format. Each sub-system, which uses its own language format has an interface which translates information for that sub-system into and from the common representation format.

Various of the above-mentioned and further features and advantages will be apparent from the specific examples described hereinbelow of an exemplary apparatus.

Figure 1 is a schematic block diagram of the manufacturing system of the present invention.

Figure 2 is a schematic block diagram of an alternate embodiment of the manufacturing system of the present invention.

Figure 3 is a schematic block diagram of another alternate embodiment of the manufacturing system of the present invention.

Figure 4 is a schematic block diagram of another alternate embodiment of the manufacturing system of the present invention.

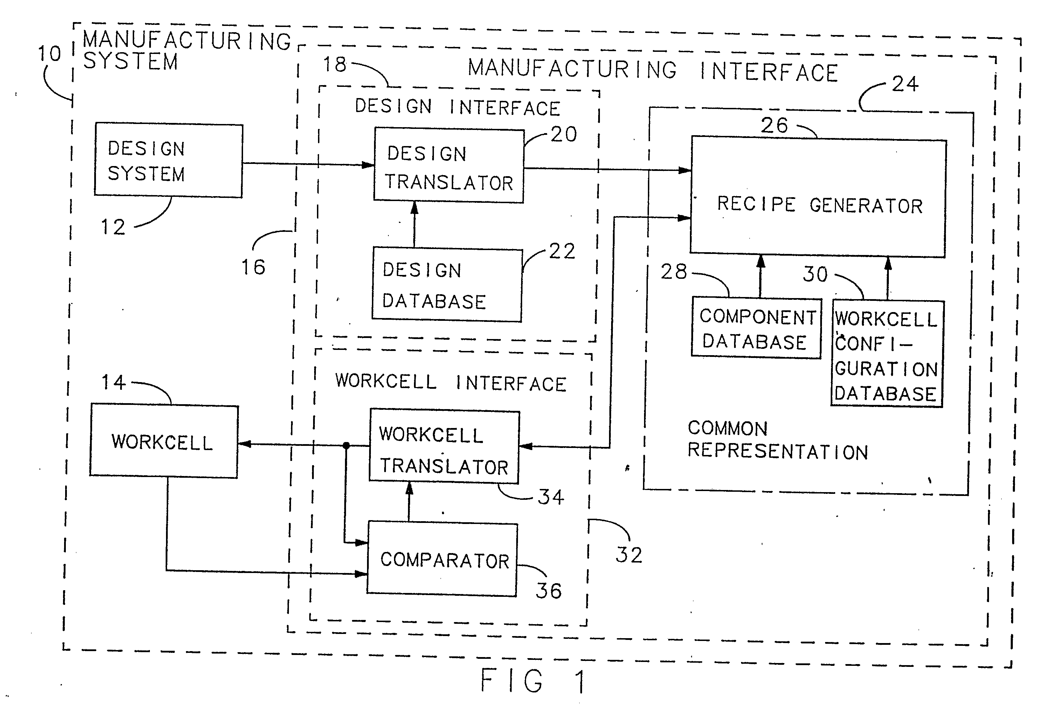

Referring now to Figure 1, a manufacturing system 10 has three main elements, a design system 12, a workcell 14, and a manufacturing interface 16.

The design system is preferably a computer aided drafting (CAD) system. In the preferred embodiment, a Hewlett-Packard Company EGS CAD system is the design system 12.

A design engineer uses design system 12 to design a printed circuit (PC) board. Part of that design is the electrical layout of the board, and another is the placement of the components on the PC board. It is the latter information which is relevant to the preferred embodiment of the present invention. This information is stored in the computer files within design system.

In the EGS CAD system, an "archive file" contains information about the design, including coded component names, component location, component orientation, and various graphic presentation information relevant only to the CAD system. This file is sent to manufacturing interface 16, into a design interface 18, and finally into a design translator 20.

A design database 22 is also connected to design translator 20. Design database 22 contains a list of the coded component names used by design system 12 cross-referenced to standard part numbers.

Design translator 20 is preferably a computer program which receives as its input the design file from design system 12, and the component cross-reference list from design database 22. Design translator 20 performs two functions. First it filters the design file from design system 12 by removing the irrelevant information such as the CAD presentation material. The remaining information is the coded component names, the component positions, and the component orientations.

The second function of design translator 20 is to translate the coded component numbers into standard part numbers from design database 22. The resulting common representation design file from design translator 20 is a list of standard part numbers with location and orientation information. This file is considered to be in a common representation format, as it uses standard part numbers, and is transmitted to a recipe generator 26.

Recipe generator 26, a component database 28 and a workcell configuration database 30 are all within a common representation area 24. This means that information used by or produced by each of the sub-systems within common representation area 24 and any information entering or leaving common representation area 24, is in the common representation format. The common representation format in the preferred embodiment requires that all components are referred to by the standard part numbers. However, in the alternate embodiments discussed below, the common representation format may be far more elaborate in specifying complex data structures for sharing information in the common representation area 24.

In addition to receiving the common representation design file from design translator 20, recipe generator 26 also receives information from component database 28 and workcell configuration database 30.

The information in component database 28 is a list of standard part numbers with a package type, gripper type, and electrical specifications for each standard part number. This information is required by workcell 14 in order for it to place the components on the PC board. The package type specifies packages types such as surface mount component packages or packages with radial leads. The gripper type refers to which of two robot grippers, available in the workcell, is required to handle the component. The electrical specifications are used by the workcell in performing limited electrical testing of the component while being handled by the robot. In alternate embodiments, discussed below, the component database might contain far more detailed information about actual dimension of the component or alternate packaging. This more general information would allow a variety of workcells to do component placement. In the preferred embodiment, however, workcell 14 has detailed information on each type of component in the standard part list.

The information in workcell configuration database 30 is the location of a component feeder for each type of component in the standard part list, in a sliding component feeder array for the particular robotic assembly workcell 14. Workcell 14 has number of component feeders arranged linearly to the robot in the work cell. In order for the robot to get a part from the feeder, the linear array of feeder indexes from side to side until the appropriate feeder is in front of the robot. In alternate embodiments, discussed below, workcell configuration database 30 might have far more detailed information about the configuration of a variety of workcells, such as tools available to the workcell, and the capabilities and limitations of the workcell.

Recipe generator 26 is preferably a computer program, which takes the list of parts in the common representation design and adds the information from component database 28 and workcell configuration database 30 to produce a list, which contains the standard part number, the package type, the electrical specifications of the component, the gripper type, the location of component feeder for that component, the location of the component on the PC board, and the orientation of the component.

The recipe generator next sorts this list on two criteria. First, it sorts the list according to gripper type. This is done so that the robot places all the components that use one gripper, then switches grippers and places all components that use the other gripper. This is done to minimize gripper changes, which are time consuming. The second criteria for sorting is the component feeder location. For all the components using the first gripper, the components are sorted such that component feeders are accessed sequentially in one direction of indexing of the component feeder array. For all the components using the second gripper, the components are sorted such that component feeders are accessed sequentially in the other direction of indexing of the component feeder array. This provides the most efficient use of the component feeder by minimizing indexing, which is time consuming.

Recipe generator 26 performs an additional task of implementing recipe changes that were made by an operator of workcell 14. This operation will be discussed in detail below..

In alternate embodiments, discussed below, recipe generator 26 might be a process planner which performs far more complex operations of partitioning a design into operation that must be performed on different workcells and must be performed in a certain order.

Recipe generator 26 produces a common representation recipe for component placement on the PC board which is the compiled and sorted list, described above. This common representation recipe is sent to a workcell translator 34 in workcell interface 32. A comparator 36 is also part of workcell interface 32.

In the preferred embodiment, workcell translator 34 is used as a holding buffer for the common representation recipe. In the preferred embodiment, the common representation recipe is in the format used by workcell 14. However, in alternate embodiments discussed below, workcell translator 34 might actually translate the common representation recipe into the language format of the workcell.

The workcell recipe from workcell translator 34 is sent to both workcell 14 and comparator 36. Workcell 14, in the preferred embodiment, is ZEVATECH Corporation PC board component placement robot. Workcell 14 executes the list of component placements in the workcell recipe.

In the execution of the workcell recipe, it is not uncommon that there are problems in the actual placement of components because of a variety of reasons, such as errors in the original design, inaccuracies in any of the databases, variations in the PC boards, and component variations. Workcell 14 allows an operator to make changes in the workcell recipe to correct for these errors and variations. While it may be desirable in the long term to correct these defects in the original design or in the databases, it may not be practical in the short term.

Manufacturing interface 16 provides a feedback system that preserves these adjustments in the workcell recipe and in future recipes generated by recipe generator 26. If this is not done, then each new recipe would have to be adjusted by the workcell operator to correct the same defects. Thus, this feedback system allows such adjustments to be preserved. It should be understood, however, that while this is an useful addition to manufacturing interface 16, it is not part of the fundamental concept of the present invention.

After the workcell operator makes an adjustment to the workcell recipe, the adjusted workcell recipe is sent to comparator 36. Comparator 36 compares the adjusted workcell recipe with the original workcell recipe and produces a list of differences. The list of differences is sent back through workcell translator 34 and then to recipe generator 26. Workcell translator 34 passes the recipe differences unchanged. However, in the alternate embodiments discussed below, where workcell 14 uses a different language format from recipe generator 26, workcell translator 34 would translate the recipe differences from the workcell format into the common representation format.

After recipe generator 26 completes the two sorting operations, it implements the recipe differences from workcell translator 34, in the new recipe.

To summarize the operation of the preferred embodiment, design system 12 produces a design in the language format of the design system. Design interface 18 translates the design, by means of design translator 20 and design database 22, into the common representation format. Recipe generator 26 accepts the common representation design and produces a common representation recipe using component database 28 and workcell configuration database 30. The workcell configuration recipe is translated into a workcell recipe by workcell interface 32 using workcell translator 34. The workcell recipe is executed by workcell 14. If necessary, the workcell operator makes adjustments in the recipe. The adjusted recipe is compared to the original workcell recipe by comparator 36 in workcell interface 32. Recipe differences are translated by workcell translator 34 into the common representation format. Recipe generator 26 uses the common representation recipe differences in producing future recipes.

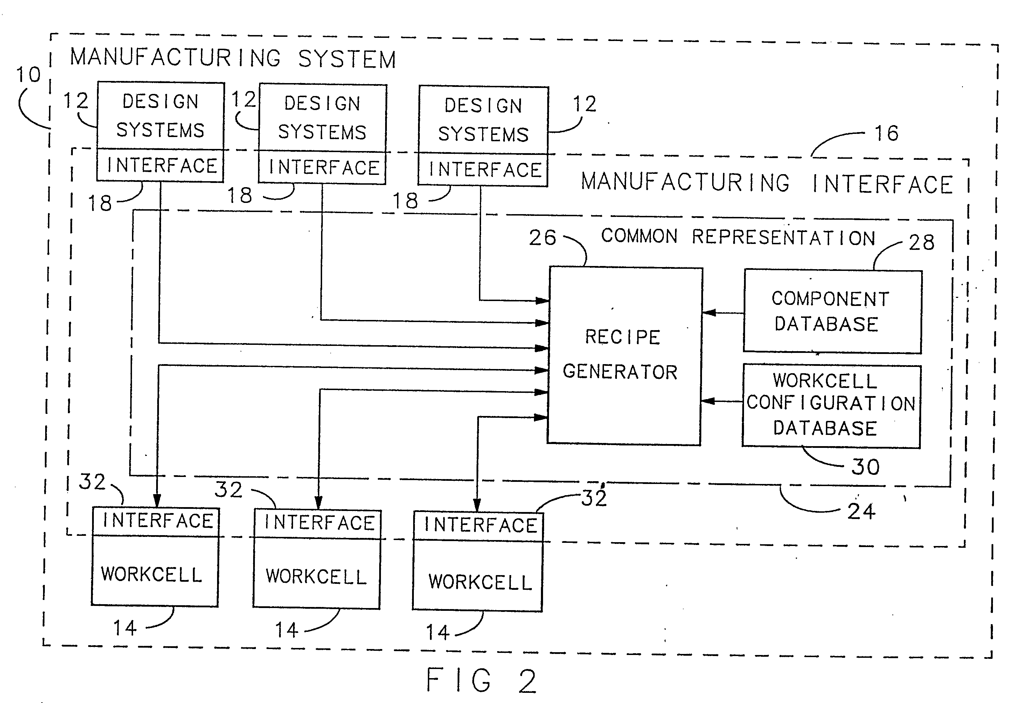

Referring now to Figure 2, an alternate embodiment of the present invention is shown. Manufacturing system 10 is comprised of a number of design systems 12, a number of workcells 14, and a manufacturing interface 16. The manufacturing interface is composed of a design interface 18 for each design system 12, workcell interface 32 for each workcell 14, and a common representation area 24, in which are a recipe generator 26, a component database 28 and workcell database 30. As described in regard to the preferred embodiment, each design interface translates designs from the design system into a common representation format, and each workcell interface translates recipes in the common representation format, produced by recipe generator 26, into workcell recipes for execution by workcells 14.

This alternate embodiment illustrates the concept of having a number of different design systems and different workcells within the same manufacturing system. A design from any design system 12 can be implemented on any workcell 14 within manufacturing system 10, without the need of separate translation program for each possible design system/workcell pair, as required by prior systems.

The arrangement of manufacturing system 10 also allows the combination of several designs, from different design systems 12, into a single recipe which could be split into separate recipes for each workcell, according to each workcell's abilities. Such a system would be possible with a more sophisticated recipe generator 26. This type of complex operation is not possible with prior systems.

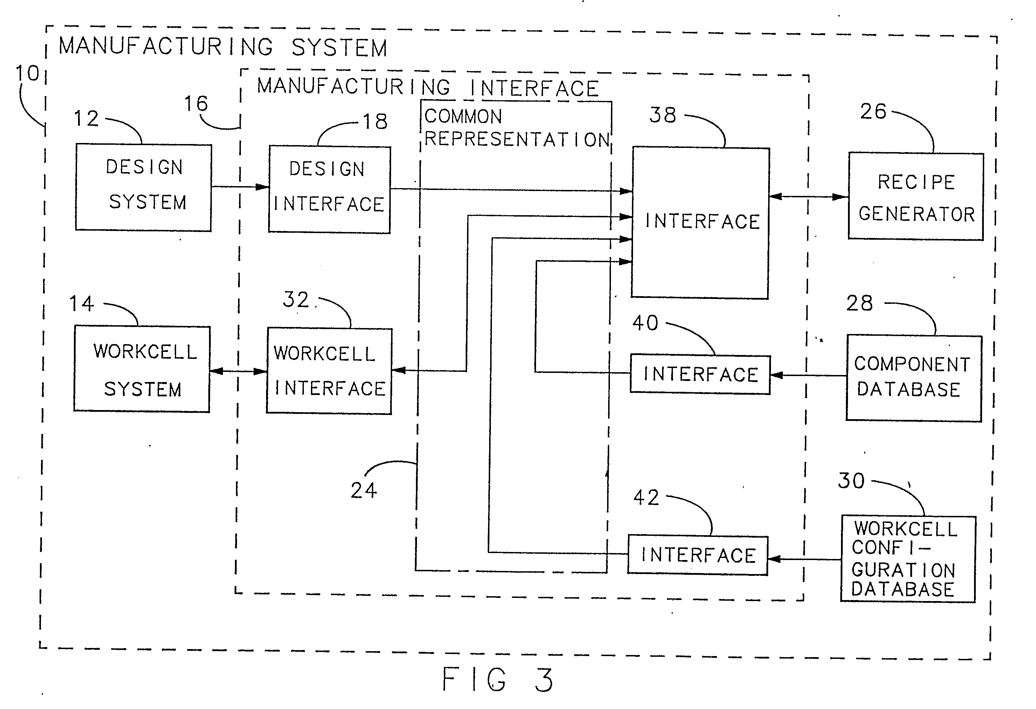

Referring now to Figure 3, an alternate embodiment of the present invention is shown. This embodiment is similar to the preferred embodiment, except that none of the manufacturing sub-systems reside in common representation area 24. This would be the case if recipe generator 26, component database 28 and workcell configuration database 30 each had their own language format. In such an arrangement, manufacturing interface 16 also includes an interface 38 for recipe generator 26, an interface 40 for component database 28, and an interface 42 for workcell configuration database 30.

This alternate embodiment illustrates the concept that none of the manufacturing sub-systems of the manufacturing system need to reside within common representation area 24 to obtain the advantages of the present invention. If a new sub-system is added or replaced, only one interface for the new sub-system need be written. If the new sub-system is to be created rather than purchased, it can be written to reside in common representation area 24, thus saving the effort to write an additional interface. However, regardless of whether a new sub-system is purchased, and needs an interface, or whether the new sub-system can be created to reside in common representation area 24, substantially less effort is required in adding the sub-system than would be required by prior systems requiring separate interfaces for each pair of communicating sub-systems.

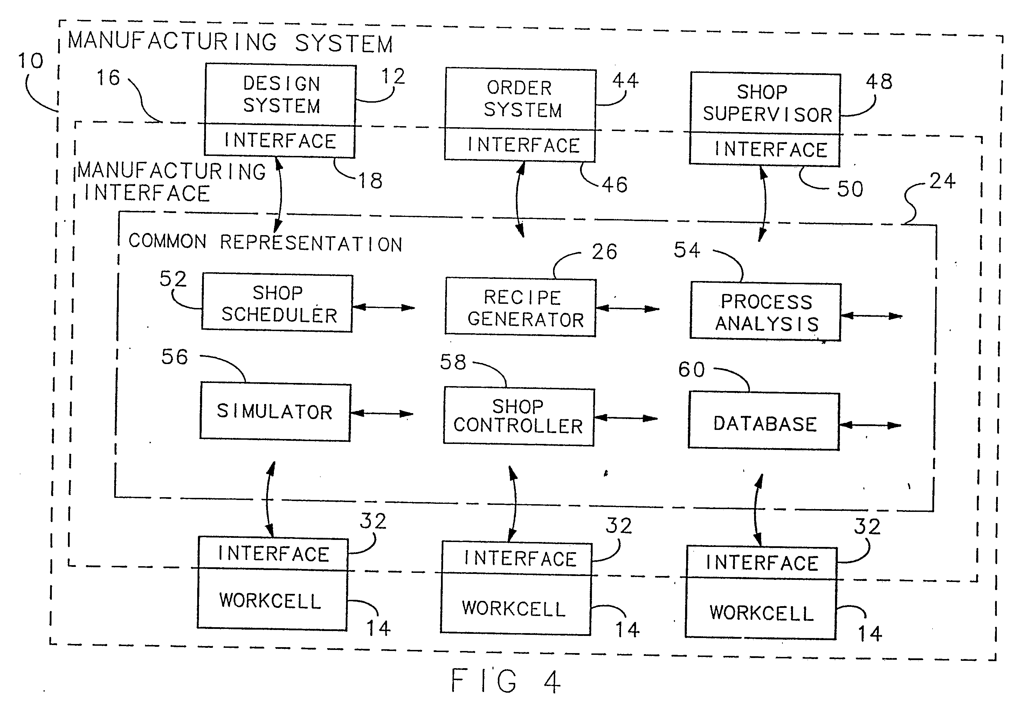

Referring now to Figure 4, an alternate embodiment of the present invention is shown. In this embodiment, a representative group of manufacturing sub-systems in a manufacturing system 10 are illustrated. Some of the sub-systems reside within a common representation area 24 and some reside outside common representation area 24. Each sub-system residing outside the common representation area 24 has an interface to the common representation format. The sub-systems are shown with connections into and out of common representation area 24, to illustrate the concept that each sub-system uses and produces information available to all other sub-systems within manufacturing system 10.

Sub-systems included in this manufacturing system include a design system 12 with its design interface 18, a recipe generator 26, and workcells 14 with their workcell interfaces 32, all discussed with reference to the previous figures. However, recipe generator 26 can be a process planner sub-system which could generator process plans instead of, or in addition to, recipes for particular workcells.

Also included in manufacturing system 10 is an order system 44 with an interface 46. order system 44 resides outside the common representation area 24 and receives orders from customers, a central order processing system, or other manufacturing systems. Orders are translated by interface 46 into the common representation format and used by other sub-systems such as a shop scheduler 52.

Another sub-system which resides outside the common representation area is a shop supervisor 48. Shop supervisor 48 might be a human being who receives information about other sub-systems and sends instructions to other subsystems through an interface 50, which translate common representation information to and from English or other human language.

Shop scheduler 52 is a sub-system that resides within common representation area 24. Because shop scheduler is within common representation area 24, it does not need to have an interface. Shop scheduler 52 maintains a schedule of the work to be done by the manufacturing system.

Another sub-system within common representation area 24 is a process analysis system. Process analysis system 54 optimizes the operation of other systems, such as the schedule maintained by the scheduler, or the recipes produced by the recipe generator.

Another sub-system within common representation area 24 is a simulator 56. Simulator 56 uses information from common representation area 24 to simulate operation of manufacturing system 10 to observe the results of planned changes in manufacturing system 10.

Another sub-system within common representation area 24 is a database 60. In this arrangement, component database 28 and workcell configuration database 30 (both of Figures 1, 2, and 3) are including in a single database 60. Database 60 would also have additional information about the operation of manufacturing system 10 that is available to all sub-systems.

This arrangement illustrates the concept that any number and type of manufacturing sub-systems can communicate through the use of common representation area 24. It should be understood that the placement of certain sub-systems within and outside common representation area 24 can be changed to other arrangements. The main factor as to whether a sub-system should reside within or outside the common representation area is whether the sub-system is pre-existing or must be created. Pre-existing sub-systems are more easily interfaced from outside common representation area 24, while new sub-systems are more easily created within common representation area 24.

In summary, the present invention provides for communication between manufacturing sub-systems in a manufacturing system. These sub-systems share information through a common representation area. Sub-systems can use and produce information in the common representation format directly, or can have an interface which translates to and from the sub-system's own language into and out of the common representation format.

## Claims

1. A manufacturing interface system characterised in that it comprises means receiving a design (18) for translating the design in which the design is represented in a common representation format; means receiving the common representation design (24) for producing a common representation recipe which implements the common representation design in the common representation format; and means receiving the common representation recipe (34) for translating the common representation recipe from the common representation format into a workcell recipe in a workcell format that, when executed by a workcell, implements the design.

2. The manufacturing interface system of claim 1 wherein the means for translating the design comprises: a design data base (22) containing design data; and a translator (20) receiving the design and receiving the design data for translating the design into a common representation design in which the design is represented in a common representation format.

3. The manufacturing interface system of claim 1 or 2 wherein the means for producing a common representation recipe comprising: a component database (28) containing component data; a workcell configuration database (30) containing workcell configuration data; and a recipe generator (26) receiving the common representation design, the component data, and the work cell configuration data for producing a common representation recipe which implements the common representation design in the common representation format.

4. The manufacturing interface system of any previous claim further comprising a comparator (36) receiving a previous workcell recipe and a previous adjusted workcell recipe to produce recipe differences, and wherein the means for producing a common representation (24) recipe incorporates the recipe differences into the common representation recipe.

5. A manufacturing system (10) characterised in that it comprises a plurality of design systems (12) for producing designs; a plurality of workcells (14) for executing workcell recipes; a plurality of interface means (18,32) for translating designs received from the design systems (12) into common representation designs which represent the designs in a common representation format, and for translating common representation recipes in the common representation format into workcell recipes; and means receiving the common representation designs (24) for producing common representation recipes which implement common representation designs.

6. The manufacturing system of claim 5 wherein the plurality of design systems (12) are computer aided drafting (CAD) systems.

7. The manufacturing system of claim 5 or 6 wherein the plurality of workcells are robotic assembly systems.

8. The manufacturing system of any of claims 5 to 7 wherein the means for producing a common representation recipe (24) comprises; a component database (28) containing component data; a workcell configuration database (30) containing workcell configuration data; and a recipe generator (26) receiving the common representation design, the component data for producing a common representation recipe which implements the common representation design in the common representation format.

9. A manufacturing system (10) characterised in that it comprises a design system (12) for producing a design in a design system format; a recipe generator (26) receiving a design in a recipe generator format for producing a recipe in the recipe generator format; a workcell system (14) for executing a recipe in workcell format; and a manufacturing interface system (18,32) for translating the design in the design system format into a common representation format, for translating the design in the common representation format to the design in the recipe generator format to the common representation format, and for translating the recipe in the common representation format to the workcell format.

10. A manufacturing system (10) in which information is shared, characterised in that it comprises a plurality of manufacturing sub-systems (28,30) which directly use and/or produce information in a common representation format; a plurality of manufacturing systems (12,14) which use and/or produce information in other formats; and interface means (18,32) for translating information in other formats into and out of the common representation format.

11. A method of interfacing a manufacturing system characterised in that it comprises the steps of :translating a design into common representation design in which the design is represented in a common representation format; producing a common representation recipe which implements the common representation design in the common representation format; and translating the common representation recipe from the common representation format into a workcell recipe in a workcell format that, when executed by a workcell, implements the design.

12. The method of interfacing a manufacturing system of claim 11 further comprising the steps of: comparing the previous workcell recipe and the previous adjusted workcell recipe to produce recipe differences; and incorporating the recipe differences into the common representation recipe.

FIG 1

MANUFACTURING SYSTEM

DESIGN SYSTEMS
INTERFACE

DESIGN SYSTEMS
INTERFACE

DESIGN SYSTEMS
INTERFACE

MANUFACTURING INTERFACE

COMMON REPRESENTATION

RECIPE GENERATOR

COMPONENT DATABASE

WORKCELL CONFIGURATION DATABASE

INTERFACE
WORKCELL

INTERFACE
WORKCELL

INTERFACE
WORKCELL

FIG 2

EP 0 331 478 A2

MANUFACTURING SYSTEM

MANUFACTURING INTERFACE

10

16

12 DESIGN SYSTEM

18 DESIGN INTERFACE

COMMON REPRESENTATION

38 INTERFACE

26 RECIPE GENERATOR

14 WORKCELL SYSTEM

32 WORKCELL INTERFACE

40 INTERFACE

28 COMPONENT DATABASE

24

42 INTERFACE

30 WORKCELL CONFI- GURATION DATABASE

EP 0 331 478 A2

FIG 3

FIG 4

MANUFACTURING SYSTEM

MANUFACTURING INTERFACE

COMMON REPRESENTATION

EP 0 331 478 A2